# FASCICULE DE BREVET EUROPEEN

(11) **EP 0 431 514 B1**
(45) Date de publication et mention de la délivrance du brevet: **09.03.1994**
(21) Numéro de dépôt: 90123079.7
(22) Date de dépôt: 03.12.1990
(51) Int. Cl.: H02K 1/27

(54) **Moteur à aimants à concentration de flux**
Motor mit Magneten der Flusskonzentrationsbauart
Motor with magnets of the flux concentration type

(30) Priorité: 08.12.1989 FR 8916251
(43) Date de publication de la demande: 12.06.1991
(73) Titulaire: GEC ALSTHOM SA, 75116 Paris (FR)
(72) Inventeur: Cuenot, Alain, F-21000 Dijon (FR); Bouziane, Bendahmane, F-21000 Dijon (FR)
(74) Mandataire: Weinmiller, Jürgen

(56) Documents cités:
- EP-A- 0 107 317
- EP-A- 0 327 470
- PATENT ABSTRACTS OF JAPAN vol. 12, no. 476 (E-693)(3323) 13 décembre 1988, & JP-A-63 194550 (FANUC) 11 août 1988.

## Description

La présente invention concerne un moteur à aimants à concentration de flux.

L'art antérieur le plus proche dans ce domaine est fourni par le document EP-A-0 327 470.

Ce document décrit un rotor de machine électrique tournante à aimants permanent de type à concentration de flux, dans lequel le rotor comprend une douille en matériau amagnétique traversée par l'arbre d'entraînement dont elle est solidaire, la solidarisation étant réalisée par un moletage effectué sur l'arbre d'entraînement coopérant avec la surface de la douille en matériau amagnétique emmanchée à force sur l'arbre d'entraînement.

Dans une telle construction, la douille subit des contraintes dépassant les limites élastiques des matériaux amagnétiques utilisables. Il en résulte, à brève échéance, des jeux pouvant conduire à la détérioration du moteur. Ce phénomène est accentué aux vitesses élevées, de sorte que le moteur de l'art antérieur devient inapte au fonctionnement à ces vitesses. D'autre part, les écarts entre les coefficients de dilatation des matériaux amagnétiques et magnétiques font apparaître, à l'échauffement inévitable du moteur en fonctionnement, des jeux positifs d'assemblage redhibitoires.

Un but de la présente invention est de réaliser un moteur dans lequel le rotor ne présente pas les inconvénients précités.

Un autre but est de réaliser un moteur de type modulaire, de manière à constituer, avec les mêmes éléments mécaniques assemblés en nombre plus ou moins grand, des moteurs dont les puissances s'échelonnent selon une gamme importante.

Un autre but de l'invention est de réaliser un moteur optimisé sur le plan électromagnétique, tout en conservant une très grande robustesse, notamment aux vitesses élevées.

Tous ces buts sont atteints par l'invention qui a pour objet un moteur à aimants à concentration de flux, comprenant un stator bobiné, et un rotor comportant un arbre, un manchon entourant l'arbre et destiné au maintien de tôles rotoriques, et des aimants permanents, caractérisé en ce que ledit manchon est constitué de manchons unitaires séparés par des disques, les manchons et les disques étant serrés entre eux par des tirants reliés à au moins une joue d'extrémité solidarisée à l'arbre.

De préférence, les manchons unitaires sont réalisés par un empilement de tôles découpées dans un matériau amagnétique et préassemblées.

Selon une autre caractéristique de l'invention, les manchons unitaires présentent une surface plane d'appui pour les aimants permanents.

Selon une autre caractéristique de l'invention, les manchons unitaires présentent deux surfaces de profil quelconque ou planes en regard coopérant avec deux surfaces conjuguées présentées par les paquets de tôles rotoriques pour leur maintien radial.

Avantageusement, les disques sont réalisés en matériau amagnétique tel que l'acier amagnétique.

Dans un mode préféré de réalisation, les manchons unitaires sont simplement enfilés sur l'arbre avec faible jeu.

En variante, les manchons unitaires sont enfilés sur l'arbre avec faible jeu et solidarisés à ce dernier au moyen de bagues de tolérance.

L'invention sera bien comprise par la description donnée ci-après d'un mode préféré de réalisation de l'invention, en référence au dessin annexé dans lequel:
- la figure 1 est est une vue en demi-coupe axiale d'un moteur selon l'invention, à six pôles.
- la figure 2 est une vue en coupe transversale du rotor du même moteur,
- la figure 3 est une vue en perspective d'un manchon unitaire selon un mode préféré de réalisation,
- la figure 4 est une vue schématique partielle en coupe axiale d'un rotor de moteur selon une variante de réalisation de l'invention,
- la figure 5 est une vue schématique partielle en coupe axiale d'un rotor de moteur montrant l'utilisation de dispositifs d'annulation de jeu.

Dans les figures, la référence 1 désigne l'arbre du moteur; sur cet arbre est enfilé un manchon 2 servant de support aux tôles rotoriques 3.

Selon une caractéristique de l'invention, ce manchon est réalisé par la juxtaposition de plusieurs manchons unitaires 2; ces manchons unitaires ont une longueur donnée, ce qui permet de les réaliser à faible prix de revient par un effet de grande série; le moteur de l'invention est modulaire en ce sens qu'il est possible de réaliser des moteurs de puissances différentes en plaçant sur un arbre des manchons unitaires en nombre adéquat, ce nombre pouvant aller de un à dix par exemple. On obtient ainsi, avec les mêmes éléments (tôles rotoriques, aimants, etc..) une gamme de moteurs de puissance allant de 1 à 10 fois une puissance unitaire donnée.

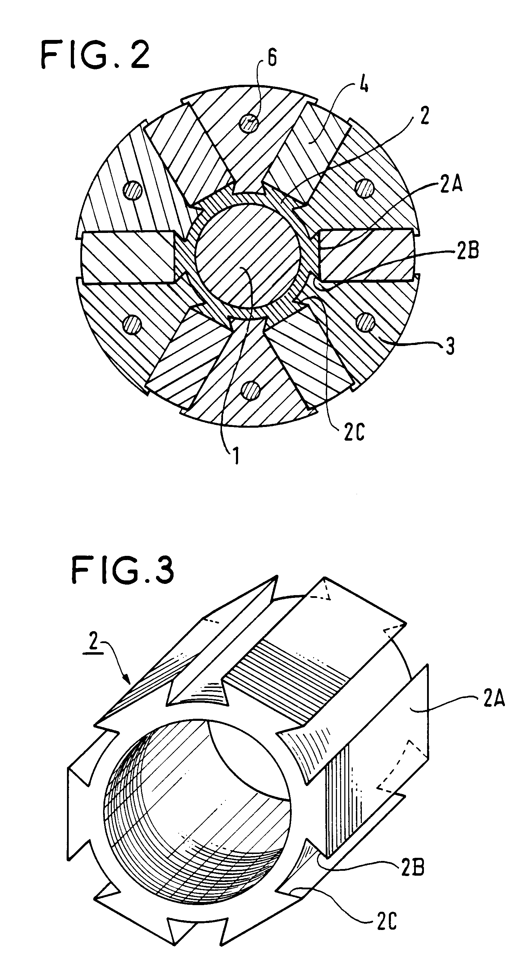

De préférence, les manchons unitaires sont constitués, comme il est représenté dans la figure 3, par des tôles découpées et assemblées en paquet, par exemple par le procédé connu sous le nom de Fastec, dans lequel chaque tôle subit une petite déformation semi-découpée créant sur une face un logement et sur l'autre face un relief; pour constituer un paquet, on assemble les tôles de manière que le relief d'une tôle s'encastre dans le logement de la tôle adjacente.

Ce procédé de réalisation du manchon est le plus économique; on peut, en variante, réaliser les manchons par filage.

La matériau choisi pour les manchons filés est un métal ou alliage amagnétique tel que l'aluminium ou un alliage à base d'aluminium.

On observe que tout rainurage de l'arbre ou du manchon, ainsi que tout moletage, sont évités. On verra plus loin comment sont solidarisé les manchons et l'arbre.

Selon une autre caractéristique de l'invention, les manchons 2 présentent des surfaces planes 2A d'appui des aimants; il y a autant de surfaces d'appui que de pôles du moteur.

En outre, les manchons présentent, pour chaque pôle, deux surfaces en regard, 2B et 2C, planes ou de profils quelconques conjugables avec des profils correspondants du pôle, pour le maintien des tôles rotoriques 3. On montrera plus loin que cette disposition est suffisante, si les tôles rotoriques présentent deux surfaces conjuguées aux surfaces 2B et 2C, pour assurer leur maintien.

Avantageusement, les tôles rotoriques sont constituées en paquets, de même épaisseur que les manchons, de préférence préassemblées selon le système Fastec précédemment décrit.

Des aimants permanents 4 sont disposés,de manière connue, dans les logements constitués par les tôles rotoriques 3 et les manchons 2.

Selon une autre caractéristique de l'invention, on dispose, entre les paquets de tôles et les manchons unitaires, des disques 5, coopérant avec des tirants d'assemblage 6. Ces disques, de préférence en matériau amagnétique, servent de raidisseurs aux tirants d'assemblage en empêchant ceux-ci de prendre une flèche trop importante.

Les tirants 6 sont de préférence en nombre égal à celui des pôles.

Les tirants 6 servent à serrer les paquets de tôles rotoriques entre deux joues 7 et 8. Le tirant 6 est de préférence vissé dans un alésage fileté d la joue 7 et serré par un écrou 9 contre la joue 8.

Les joues 7 et 8 sont réalisées de préférence en matériau amagnétique, de préférence en acier amagnétique.

Le couple moteur est transmis à l'arbre par les tirants 6 et la joue 7; cette dernière est solidaire d'une bague 10, emmanchée à chaud sur l'arbre et clavetée.

Cette disposition, qui assure une parfaite transmission du couple moteur à l'arbre, permet un montage très aisé du moteur puisque les manchons ne sont pas emmanchés à force sur l'arbre, qui ne présente ainsi ni rainurage, ni molletage.

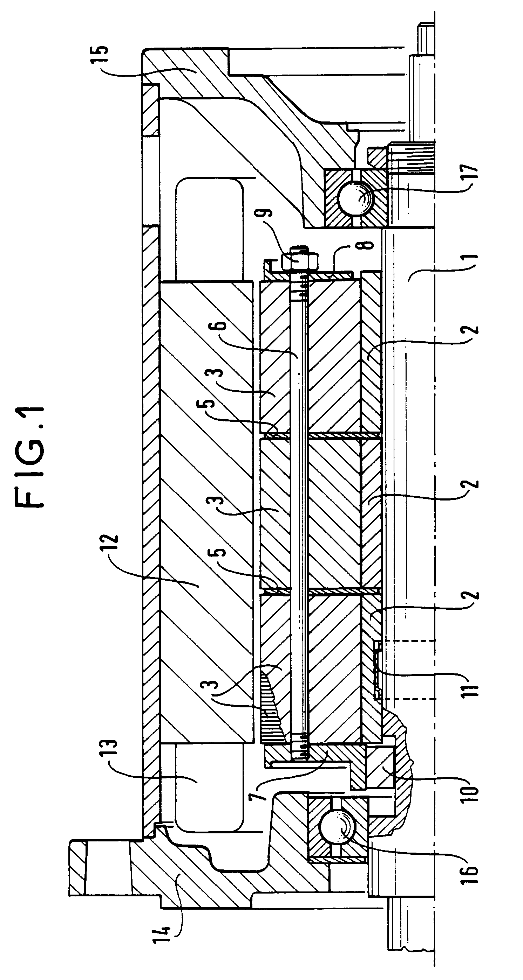

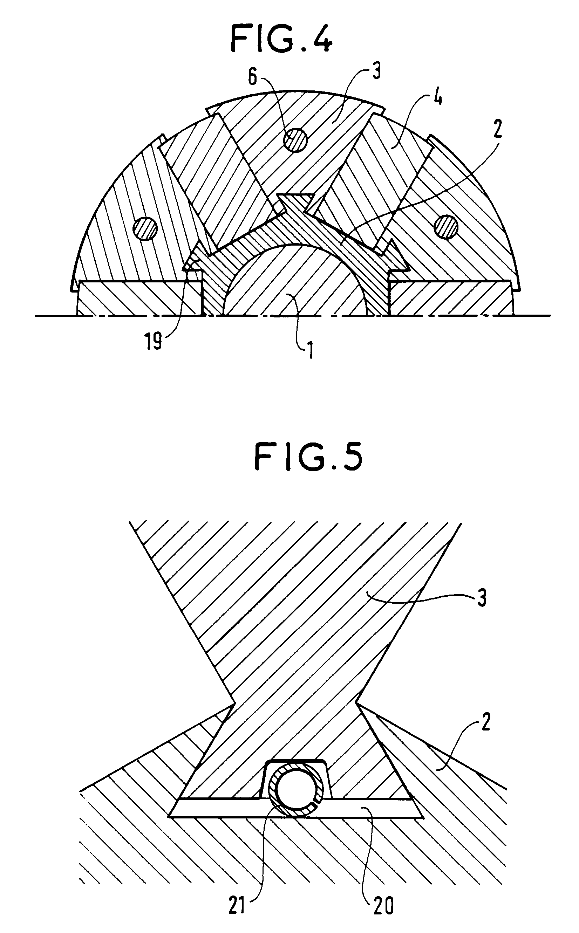

On notera qu'on peut,comme le montre la figure 4, utiliser un montage dans lequel le manchon 2 présente des tenons 19 coopérant avec des mortaises complémentaires pratiquées dans les tôles rotoriques (profils inversés par rapport à ceux des réalisations des figures 1 à 3).

La figure 5 montre un mode de réalisation, conforme à celui des figures 1 à 3, dans lequel le jeu 20 entre le paquet de tôles rotoriques 3 et le manchon 2 est annulé par des goupilles élastiques 21, par exemple de type "mecaninous" ou spiralé.

On voit par ailleurs que le parfait maintien des tôles rotoriques est assuré dans la direction axiale et que les surfaces conjuguées des manchons et des tôles mentionnées plus haut suffisent à assurer le maintien radial des tôles rotoriques.

On peut, facultativement, disposer entre chaque manchon et l'arbre, un dispositif de solidarisation 11 du type bague de tolérance , comme par exemple celle qui est connue sous l'appellation bague"Star".

Le montage de telles bagues ne nécessite pas obligatoirement de rainurer longitudinalement, mais nécessite l'exécution de gorges transversales sur l'arbre ou dans l'alésage des manchons.

Les autres parties du moteur sont réalisées de manière connue: on distingue dans la figure 1, le stator comprenant un circuit magnétique 12 et des bobinages 13, des flasques d'extrémité 14 et 15 et des roulements 16 et 17.

## Revendications

1. Moteur à aimants à concentration de flux, comprenant un stator bobiné, et un rotor comportant un arbre, un manchon entourant l'arbre et destiné au maintien de tôles rotoriques, et des aimants permanents, caractérisé en ce que ledit manchon est constitué de manchons unitaires (2) séparés par des disques (5), les manchons et les disques étant serrés entre eux par des tirants (6) reliés à au moins une joue d'extrémité (7) solidarisée à l'arbre (1).

2. Moteur selon la revendication 1, caractérisé en ce que les manchons unitaires (2) sont réalisés par un empilement de tôles découpées dans un matériau amagnétique et préassemblées.

3. Moteur selon l'une des revendications 1 et 2, caractérisé en ce que les manchons unitaires (2) présentent une surface plane (2A) d'appui pour les aimants permanents.

4. Moteur selon l'une des revendications 1 à 3, caractérisé en ce que les manchons unitaires (2) présentent deux surfaces de profil quelconque ou planes (2B, 2C) en regard coopérant avec deux surfaces conjuguées présentées par les paquets de tôles rotoriques pour leur maintien radial.

5. Moteur selon l'une des revendications 1 à 4, caractérisé en ce que les disques (5) sont réalisés en matériau amagnétique tel que l'acier amagnétique.

6. Moteur selon l'une des revendications 1 à 5, caractérisé en ce que les manchons unitaires (2) sont simplement enfilés sur l'arbre (1) avec faible jeu.

7. Moteur selon l'une des revendications 1 à 5, caractérisé en ce que les manchons unitaires (2) sont enfilés sur l'arbre (1) avec faible jeu et solidarisés à ce dernier au moyen de bagues de tolérance ( 11).

8. Moteur selon l'une des revendications 1 à 6 caractérisé en ce que le jeu (20) entre les tôles rotoriques (3) et le manchon (2) est annulé par des goupilles élastiques.

## Patentansprüche

1. Motor mit Magneten und Flußkonzentration, der einen bewikkelten Stator und einen Rotor mit einer Welle, einer die Welle umgebenden und die Rotorbleche haltenden Muffe und mit Dauermagneten aufweist, dadurch gekennzeichnet, daß diese Muffe aus durch Scheiben (5) getrennten Muffeneinheiten (2) besteht, wobei die Muffeneinheiten und die Scheiben durch Spannstangen (6) verspannt sind, die mit mindestens einer mit der Welle (1) fest verbundenen Endbacke (7) verbunden sind.

2. Motor nach Anspruch 1, dadurch gekennzeichnet, daß die Muffeneinheiten (2) aus einem Stapel von Blechen hergestellt sind, die aus einem unmagnetischen Material ausgeschnitten und vormontiert sind.

3. Motor nach einem der Ansprüche 1 und 2, dadurch gekennzeichnet, daß die Muffeneinheiten (2) eine ebene Auflagefläche (2A) für die Dauermagneten aufweisen.

4. Motor nach einem der Ansprüche 1 bis 3, dadurch gekennzeichnet, daß die Muffeneinheiten (2) zwei einander gegenüberliegende Oberflächen (2B, 2C) beliebigen oder ebenen Profils aufweisen, die mit zwei konjugierten Oberflächen der Rotorblechpakete zusammenwirken und ihnen radialen Halt verleihen.

5. Motor nach einem der Ansprüche 1 bis 4, dadurch gekennzeichnet, daß die Scheiben (5) aus unmagnetischem Material wie unmagnetischem Stahl hergestellt sind.

6. Motor nach einem der Ansprüche 1 bis 5, dadurch gekennzeichnet, daß die Muffeneinheiten (2) einfach auf die Welle (1) mit geringem Spiel aufgeschoben sind.

7. Motor nach einem der Ansprüche 1 bis 5, dadurch gekennzeichnet, daß die Muffeneinheiten (2) auf die Welle (1) mit geringem Spiel aufgeschoben und an dieser Welle mit Hilfe von Toleranzringen (11) befestigt sind.

8. Motor nach einem der Ansprüche 1 bis 6, dadurch gekennzeichnet, daß das Spiel (20) zwischen den Rotorblechen (3) und der Muffe (2) durch elastische Stifte beseitigt wird.

## Claims

1. A motor having flux-concentrating permanent magnets, the motor comprising a stator with windings and a rotor comprising a shaft, a sleeve surrounding the shaft for holding rotor laminations, and permanent magnets, the motor being characterized in that said sleeve is constituted by unitary sleeves (2) separated by disks (5), the sleeves and the disks being clamped together by tie bars (6) connected to at least one end cheek plate (7) which is fixed to the shaft (1).

2. A motor according to claim 1, characterized in that the unitary sleeves (2) are made by stacking laminations cut out from non-magnetic material and preassembled.

3. A motor according to claim 1 or 2, characterized in that the unitary sleeves (2) have respective plane bearing surfaces (2A) for the permanent magnets.

4. A motor according to any one of claims 1 to 3, characterized in that the unitary sleeves (2) have facing pairs of surfaces of plane or arbitrary profile (2B, 2C) for holding the packets of laminations radially by cooperating with pairs of complementary surfaces presented thereby.

5. A motor according to any one of claims 1 to 4, characterized in that the disks (5) are made of a non-magnetic material such as non-magnetic steel.

6. A motor according to any one of claims 1 to 5, characterized in that the unitary sleeves (2) are merely threaded over the shaft (1) with a small amount of clearance.

7. A motor according to any one of claims 1 to 5, characterized in that the unitary sleeves (2) are threaded over the shaft (1) with a small amount of clearance and are fixed thereto by means of tolerance rings (11).

8. A motor according to any one of claims 1 to 6, characterized in that the clearance (20) between the rotor laminations (3) and the sleeve (2) is eliminated by resilient pins.
